# EUROPÄISCHE PATENTSCHRIFT

(11) **EP 2 397 391 B1**
(45) Veröffentlichungstag und Bekanntmachung des Hinweises auf die Patenterteilung: **02.09.2015**
(21) Anmeldenummer: 11002996.4
(22) Anmeldetag: 09.04.2011
(51) Int. Cl.: B62D 21/02, B62D 33/06, B60K 11/04

(54) **Vorbaustruktur für ein Nutzfahrzeug, insbesondere für einen Lastkraftwagen**
Front structure for a commercial vehicle, in particular a heavy goods vehicle
Structure avant pour un véhicule utilitaire, notamment pour un poids-lourd

(30) Priorität: 17.06.2010 DE 102010024176
(43) Veröffentlichungstag der Anmeldung: 21.12.2011
(73) Patentinhaber: MAN Truck & Bus AG, 80995 München (DE)
(72) Erfinder: Beck, Klaus, 82278 Althegnenberg (DE); Butscher, Jochen, 81371 München (DE)

(56) Entgegenhaltungen:
- EP-A1- 0 591 718
- EP-A1- 2 295 312
- EP-A2- 1 637 438
- WO-A1-2004/062984

## Beschreibung

Die vorliegende Erfindung betrifft eine Vorbaustruktur für ein Nutzfahrzeug gemäß dem Oberbegriff des Patentanspruches 1.

Vorbaustrukturen für Nutzfahrzeuge wie Z.B. in EP 1 637 438 und EP 0 591 718 sind u. a. so ausgelegt, dass Crashkräfte unter Einhaltung adäquater Verzögerungswerte zuverlässig aufgenommen werden und zum Beispiel auch aus Abschleppmanövern entstehende Zug- und Schubkräfte robust über den Fahrzeugunterbau abgestützt sind. Dabei sind Freiräume für Einbauten wie insbesondere einem frontseitigen Kühlermodul für das Antriebsaggregat zu berücksichtigen, die die Ausbildung der Rahmenlängsträger, der Querträger und gegebenenfalls weiterer, aussteifender Streben beeinflussen.

Aufgabe der Erfindung ist es, eine Vorbaustruktur für ein Nutzfahrzeug, insbesondere für einen Lastkraftwagen, anzugeben, mittels der auch unter Berücksichtigung eines relativ großflächigen Kühlermoduls eine zuverlässige Abstützung von Crashkräften, Abschleppkräften, etc. bei einer baulich und fertigungstechnisch günstigen Konstruktion erzielbar ist.

Die Lösung dieser Aufgabe gelingt mit den Merkmalen des Patentanspruches 1. Vorteilhafte und besonders zweckmäßige Weiterbildungen der Erfindung sind in den Unteransprüchen angeführt.

Erfindungsgemäß wird vorgeschlagen, dass die Längsträger in Fahrzeuglängsrichtung gesehen vor der senkrechten Radmittelebene der Vorderräder schräg nach, bezogen auf die Fahrzeuglängs- und -hochachsenrichtung, vorne unten abknickend ausgeführt sind, wobei der Querträger an diesen Verlängerungsabschnitten angebunden ist, vorzugsweise in Fahrzeughochachsenrichtung gesehen an deren unteren Bereich angebunden ist und dass der Kühler in Fahrzeughochachsenrichtung gesehen im Wesentlichen oberhalb des Querträgers positioniert ist. Durch die Absenkung des Querträgers in den die Bodenfreiheit des Nutzfahrzeuges bestimmenden, unteren Bereich wird zusätzlicher Platz für den Einbau eines relativ großen Kühlermoduls geschaffen und trotzdem eine wirkungsvolle, im Verformungsverhalten gezielte Krafteinleitung über den Querträger auf die besonders steifen Rahmenlängsträger hergestellt. Sämtliche Richtungsangaben beziehen sich hierbei auf die üblichen Fahrzeugachsen, wie in den Ansprüchen angegeben.

Insbesondere kann dabei der Querträger im Wesentlichen in Fahrzeughochachsenrichtung unterhalb und/oder in Fahrzeuglängsrichtung hinter dem in Fahrzeughochachsenrichtung gesehen unteren Randbereich des Kühlers verlaufen und zumindest eine Abschleppkupplung tragen, die bevorzugt von vorne und/oder unterhalb und/oder seitlich des Kühlers zugänglich ist. Das Kühlermodul liegt somit außerhalb des Ankupplungsbereiches zum Beispiel einer Abschleppstange; ferner ist eine sichere, besonders robuste und stoßunempfindliche Krafteinleitung gegeben.

In vorteilhafter Weiterbildung der Vorbaustruktur kann im Wesentlichen an der Abknickstelle der Längsträger eine, bezogen auf die Fahrzeuglängsachse und die Fahrzeughochachse, schräg nach vorne und oben abragende, die beiden Längsträger verbindende Trägerstruktur vorgesehen sein, die etwa am, bezogen auf die Fahrzeughochachse, oberen Randbereich des Kühlers und, bezogen auf die Fahrzeuglängsachse, hinter diesem endet und die zumindest teilweise das Fahrerhaus abstützt. Daraus resultiert in der Seitenansicht gesehen eine V-förmig nach vorne ausgerichtete Anstellung der Tragstrukturen mit dazwischen positioniertem Kühlermodul. Die Trägerstruktur kann fertigungstechnisch günstig durch ein einstückiges, bogenförmiges Profilbauteil gebildet sein, das zudem eine hohe Festigkeit sowohl in Längsrichtung als auch in Querrichtung aufweist.

Des Weiteren kann an der Trägerstruktur eine das Fahrerhaus in Längsrichtung und/oder Querrichtung führende Schwinge angelenkt sein, die eine schwingungsresistente, von Fahrbahnanregungen wirkungsvoll abgekoppelte Abstützung des Fahrerhauses im vorderen Bereich herstellt.

In weiterer, vorteilhafter Ausgestaltung der Erfindung können an dem Querträger etwa vertikal nach oben in Fahrzeughochachsenrichtung verlaufende, seitliche Stützen befestigt sein, die das Fahrerhaus im vorderen Bereich über dazwischen geschaltete Federelemente insbesondere in vertikaler Richtung abstützen. Insbesondere in Verbindung mit der vorgenannten Schwinge resultiert daraus eine feinfühlig ansprechende Bewegungsdämpfung des Fahrerhauses auf jegliche Anregungen aus dem Fahrbetrieb und/oder aus Fahrbahnunebenheiten.

Die mit dem Querträger und gegebenenfalls auch der oberen Trägerstruktur verbundenen Stützen können zweckmäßiger Weise über an den in Fahrzeugquerrichtung gesehen seitlichen Randbereichen des Kühlers vorgesehene Halterungen den Kühler und gegebenenfalls auch eine einen Kühlergrill aufweisende Bugschürze mit einem integrierten Stoßfänger tragen.

Des Weiteren kann der untere Querträger in baulich einfacher Weise über beidseitig angeordnete Konsolen zumindest jeweils eine Trittstufe für den Einstieg in das Fahrerhaus tragen.

Die nach unten abragenden Verlängerungsabschnitte können zumindest im Wesentlichen den Längsträgern querschnittsgleiche Rahmenbauteile sein, die mittels Verbindungselementen fest mit den Längsträgern verbunden sind. Die Verlängerungsabschnitte können Blechteile sein, zum Beispiel Blech-Pressteile oder Blech-Biegeteile.

Alternativ können die nach unten abragenden Verlängerungsabschnitte der Längsträger auch durch Gussbauteile oder Schmiedebauteile aus _Stahl, Eisen oder Leichtmetall gebildet sein. Gleiches gilt für den Querträger und/oder die Trägerstruktur des Vorbaus, die ebenfalls als Guss- oder Schmiedebauteile hergestellt sein können.

Die Verbindungselemente sind zum Beispiel aus Blech, zum Beispiel aus Stahlblech gefertigt, können aber auch Guss- oder Schmiedebauteile aus Stahl, Eisen oder Leichtmetall sein.

Ferner kann fertigungstechnisch günstig und aus Festigkeitsgründen die, bezogen auf die Fahrzeuglängsachse sowie die Fahrzeughochachse, schräg nach vorne und oben abragende Trägerstruktur rohrförmig als Hohlprofil ausgeführt sein.

Schließlich können an den nach unten abragenden Verlängerungsabschnitten der Längsträger Radführungselemente der Vorderräder des Nutzfahrzeuges angelenkt sein, wodurch an diesen räumlich günstig positionierten Anlenkstellen aufwendige Konsolen oder Rahmenausbildungen entfallen können.

Besonders günstig im Hinblick auf Brauraumverhältnisse ist weiter eine Anordnung der Abschleppkupplung, die im angebauten Zustand in den Böschungswinkel ragt.

Ein Ausführungsbeispiel der Erfindung ist im Folgenden anhand der beiliegenden, schematischen Zeichnung näher erläutert. Es zeigen:
- Fig. 1: eine Seitenansicht einer Vorbaustruktur für ein Nutzfahrzeug mit zwei Rahmenlängsträgern mit vorderen, nach unten abgeknickten Verlängerungsabschnitten, einem unteren Querträger und einer oberen, an das Fahrerhaus anschließenden Trägerstruktur;
- Fig. 2: eine Vorderansicht auf die Vorbaustruktur gemäß Fig. 1 mit Darstellung des unteren Querträgers, der oberen, bogenförmigen Trägerstruktur und der Lagerung des Fahrerhauses über eine Schwinge und vertikal verlaufenden Stützen; und
- Fig. 3: eine Draufsicht auf die Vorbaustruktur gemäß den Fig. 1 und 2 mit teilweiser Darstellung des eingebauten Antriebsaggregats, den Längsträgern und dem Querträger mit daran befestigten Trittstufen als Einstiegshilfe in das Fahrerhaus.

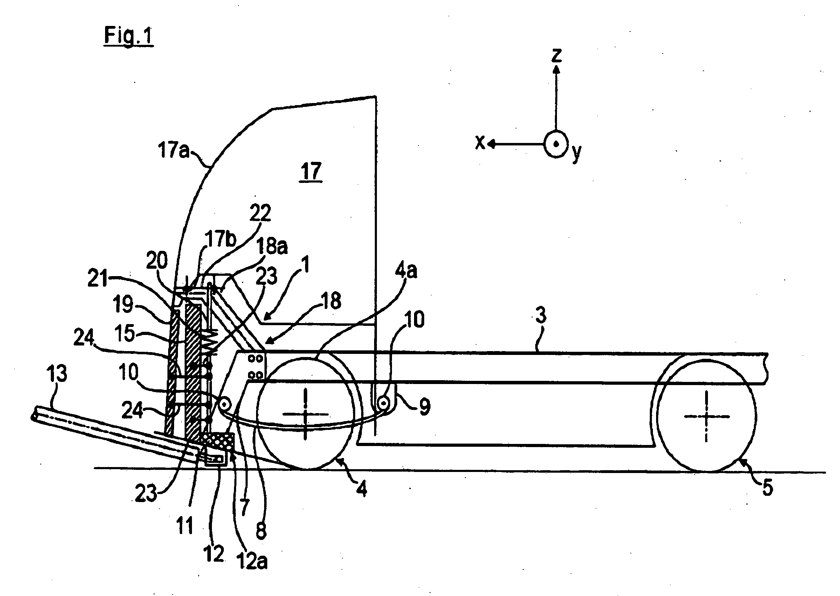

Die in den Fig. 1 bis 3 dargestellte Vorbaustruktur 1 für ein Nutzfahrzeug weist zwei parallel zueinander und in Fahrzeuglängsrichtung nach hinten führende Rahmenlängsträger 2, 3 auf, die beispielhaft aus einem im Querschnitt U-förmigen Profilteil aus Stahlblech hergestellt sind und die oberhalb der nur angedeuteten Radachsen 4, 5 positioniert sind. Der weitere Rahmenunterbau des Nutzfahrzeuges ist nur die Vorbaustruktur 1 betreffend beschrieben und kann im Übrigen bekannter Bauart sein.

Die Fahrzeughochachse ist hier durch die z-Achse, die Fahrzeuglängsachse durch die x-Achse und die Fahrzeugquerachse durch die y-Achse definiert.

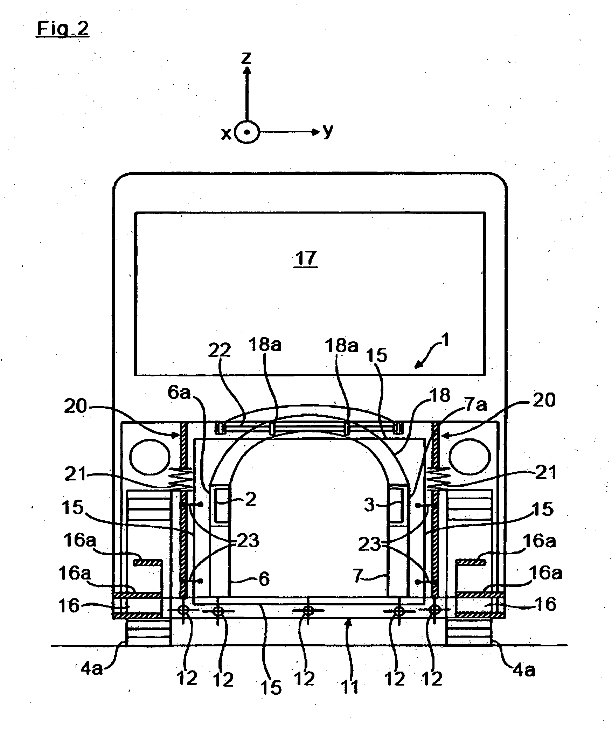

An die Längsträger 2, 3 sind schräg nach vorne und unten abknickende Verlängerungsabschnitte 6, 7 angeschlossen, die hier lediglich beispielhaft ebenfalls einen U-förmigen Querschnitt aufweisen und durch überlappende Verbindungselemente 6a, 7a (Fig. 2) gegebenenfalls durch Niet- und/oder Schweißverbindungen fest mit den Längsträgern verbunden sind. Die Abknickstelle bzw. Verbindungsstelle liegt wie insbesondere aus der Fig. 1 ersichtlich ist vor der vorderen Radachse 4 bzw. vor den Vorderrädern 4a des Nutzfahrzeuges.

Etwa in Höhe der Radmittelachse der vorderen Radachse 4 sind beidseitig Radführungselemente hier in Form von Blattfedern 8 vorgesehen, die an den Längsträgern 2, 3 über Konsolen 9 und unmittelbar an den Verlängerungsabschnitten 6, 7 über Federlager 10 angelenkt sind.

Die Verlängerungsabschnitte 6, 7 sind an ihrer freien Stirnseite mit einem Querträger 11 fest verbunden; dies kann in nicht dargestellter Weise mittels überlappender Knotenbleche und durch Schraub- Niet- und/oder Schweißverbindungen bewerkstelligt sein.

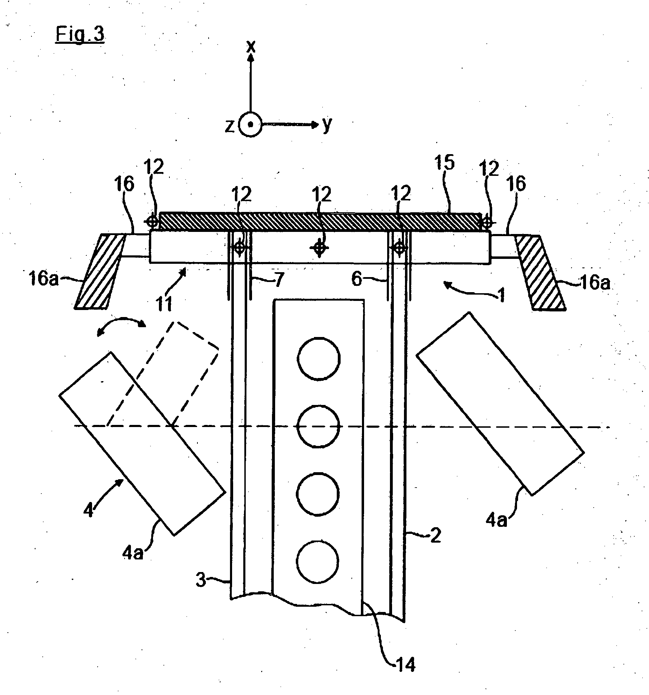

An dem Querträger 11 ist eine nach unten abragende, vorzugsweise abnehmbare Abschleppkupplung 12 befestigt, an der zum Beispiel eine Abschleppstange 13 (in Fig. 1 angedeutet) ankuppelbar ist. Die Abschleppkupplung 12 (die bekannter Bauart sein kann) kann, wie in Fig. 3 abstrahiert gezeigt im Bereich des Böschungswinkels 12a angeordnet sein und zum Beispiel zentral oder im Bereich der Anbindungsstellen zwischen den Verlängerungsabschnitten 6, 7 oder seitlich eines vor einer Brennkraftmaschine als Antriebsaggregat 14 angeordneten Luft-Wasser-Wärmetauschers bzw. Kühlers 15 oder eines Kühlermoduls aus mehreren Wärmetauschern positioniert sein. Diese Abschleppkupplung 12 kann sowohl fest als auch abnehmbar ausgeführt sein.

Ferner sind an den seitlichen Endbereichen des Querträgers 11 Konsolen 16 befestigt, die mehrere Trittstufen 16a als Einstiegshilfe in das oberhalb der Längsträger 2, 3 angeordnete Fahrerhaus 17 des Nutzfahrzeuges tragen.

Im Verbindungsbereich der Verlängerungsabschnitte 6, 7 mit den Längsträgern 2, 3 ist eine Trägerstruktur 18 fest angebunden, die schräg nach vorne oben ausgerichtet ist und die wie aus der Fig. 2 ersichtlich ist bogenförmig die beiden Längsträger 2, 3 miteinander verbindet. Die aus einem rohrförmigen Profilbauteil gebildete Trägerstruktur 18 ist mit den Längsträgern 2, 3 durch Schraubverbindungen, Nietverbindungen und/oder durch eine Schweißverbindung fest verbunden.

Das an seiner Vorderseite 17a an eine Bugschürze 19 (Fig. 1) mit einem Kühlergrill anschließende Fahrerhaus 17 ist an seiner Unterseite an der Vorbaustruktur 1 elastisch bzw. schwingungsgedämpft abgestützt. Die in Fahrtrichtung hinten liegende Abstützung ist nicht dargestellt.

Zur vorderen Abstützung sind seitlich außerhalb der Längsträger 2, 3 etwa vertikal ausgerichtete Stützen 20 vorgesehen, in die jeweils ein Feder- und Dämpfungselement 21 integriert ist und die an ihrer Unterseite mit dem Querträger 11 und an ihrem oberen Ende mit dem Fahrerhaus 17 fest verbunden bzw. verschraubt sind.

Ferner sind an der bogenförmigen Trägerstruktur 18 zwei gummielastische Lagerstellen 18a und am Fahrerhaus 17 zwei gummielastische Lagerstellen 17b angeordnet, in denen eine etwa U-förmige, nach vorne offene Schwinge 22 gelagert ist, die das Fahrerhaus 17 in Längs- und Querrichtung abstützt, Federbewegungen in Hochrichtung jedoch zulässt.

Innerhalb der vertikalen Stützen 20 ist der Kühler 15 angeordnet, der an seinen Randbereichen über Halter 23 an dem unteren, festen Bereich der Stützen 20 befestigt ist. Der untere Randbereich des Kühlers 15 endet, wie aus der Fig. 1 ersichtlich ist, etwa in einer mit der Unterseite des Querträgers 11 einheitlichen Ebene, so dass der für das Ankuppeln einer Abschleppstange 13 erforderliche Freiraum nach vorne sichergestellt ist. Des Weiteren ist der Kühler 15 im Wesentlichen zwischen dem Querträger 11 und der Trägerstruktur 18 innerhalb des V-förmigen, nach vorne offenen Freiraumes positioniert.

Über weitere Halter 24 (Fig. 1, nur angedeutet) ist auch die Bugschürze 19 an den Stützen 20 befestigt. Gleiches gilt für einen vor der Bugschürze 19 angeordneten, nicht dargestellten Stoßfänger des Nutzfahrzeuges.

Der Querträger 11 kann als offenes oder geschlossenes Profilbauteil aus Stahlblech oder als Guss- oder Schmiedeteil aus Stahl oder Eisen oder Leichtmetall hergestellt sein. Gleiches gilt für die Trägerstruktur 18, die gegebenenfalls auch durch zwei Längsholme und einen Querholm gebildet sein könnte, die entsprechend fest miteinander verbunden sind.

Die Verlängerungsabschnitte 6, 7 der Längsträger 2, 3 könnten ebenfalls als Rahmenbauteile aus Stahlblech oder als Guss- oder Schmiedeteile aus einer Eisen- oder Stahllegierung hergestellt sein.

Die Einleitung der an der Vorbaustruktur 1 gegebenenfalls auftretenden Crashkräfte oder Abschleppkräfte in die Längsträger 2, 3 erfolgt im Wesentlichen von unterhalb oder oberhalb des Kühlers 15 über die Verlängerungsabschnitte 6, 7 und/oder über die vertikalen Stützen 20 und die Trägerstruktur 18, wobei über die Werkstoffeigenschaften und die geometrische Auslegung dieser Bauteile ein gezieltes Verformungsverhalten einstellbar ist.

Im Normalbetrieb des Nutzfahrzeuges bietet die Vorbausstruktur 1 durch die beschriebene Gestaltung eine robuste, die erforderlichen Einbauten und Anbauten montagegünstig aufnehmende, baulich einfache Konstruktion, die zudem fertigungstechnisch unkompliziert herstellbar ist.

### Bezugszeichenliste

- 1: Vorbaustruktur
- 2: Längsträger
- 3: Längsträger
- 4: Radachse
- 4a: Vorderräder
- 5: Radachse
- 6: Verlängerungsabschnitt
- 6a: Verbindungselement
- 7: Verlängerungsabschnitt
- 7a: Verbindungselement
- 8: Blattfeder
- 9: Konsole
- 10: Federlager
- 11: Querträger
- 12: Abschleppkupplung
- 13: Abschleppstange
- 14: Antriebsaggregat
- 15: Kühler
- 16: Konsolen
- 16a: Trittstufen
- 17: Fahrerhaus
- 17a: Vorderseite
- 17b: Lagerstellen
- 18: Trägerstruktur
- 18a: Lagerstellen
- 19: Bugschürze

- 20: Stützen
- 21: Federelement
- 22: Schwinge
- 23: Halter
- 24: Halter

## Patentansprüche

1. Vorbaustruktur für ein Nutzfahrzeug, mit einem Rahmenunterbau mit zwei in Fahrzeuglängsrichtung verlaufenden Längsträgern (2, 3), einem oberhalb der Längsträger (2, 3) elastisch gelagerten Fahrerhaus (17), einem frontseitig angeordneten, zwischen den Längsträgern (2, 3) gelagerten Antriebsaggregat (14) und einem in Fahrzeuglängsrichtung gesehen davor positionierten Kühler (15), sowie mit einem die Längsträger (2, 3) verbindenden Querträger (11), wobei die Längsträger (2, 3) in Fahrzeuglängsrichtung gesehen vor der senkrechten Radmittelebene der Vorderräder (4) schräg nach, bezogen auf die Fahrzeuglängsrichtung und die Fahrzeughochachsenrichtung, vorne unten abknickend ausgeführt sind, wobei der Querträger (11) an diesen Verlängerungsabschnitten (6, 7) angebunden ist, und dass der Kühler (15) in Fahrzeughochachsenrichtung gesehen oberhalb des Querträgers (11) positioniert ist, **dadurch gekennzeichnet, dass** der Querträger (11) in Fahrzeughochachsenrichtung unterhalb und/oder in Fahrzeuglängsrichtung hinter dem unteren Randbereich des Kühlers (15) verläuft und zumindest eine Abschleppkupplung (12) trägt.

2. Vorbaustruktur nach Anspruch 1, **dadurch gekennzeichnet, dass** die Abschleppkupplung (12) von, bezogen auf die Fahrzeuglängsrichtung und die Fahrzeughochachsenrichtung sowie die Fahrzeugquerrichtung, vorne und/oder unterhalb und/oder seitlich des Kühlers (15) zugänglich ist.

3. Vorbaustruktur nach Anspruch 1 oder 2, **dadurch gekennzeichnet, dass** an der Abknickstelle der Längsträger (2, 3) eine, bezogen auf die Fahrzeuglängsrichtung und die Fahrzeughochachsenrichtung, schräg nach vorne und oben abragende, die beiden Längsträger (2, 3) verbindende Trägerstruktur (18) vorgesehen ist, die am, bezogen auf die Fahrzeughochachse, oberen Randbereich des Kühlers (15) und, bezogen auf die Fahrzeuglängsachse, hinter diesem endet und die zumindest teilweise das Fahrerhaus (17) abstützt.

4. Vorbaustruktur nach Anspruch 3, **dadurch gekennzeichnet, dass** die Trägerstruktur (18) durch ein einstückiges, bogenförmiges Profilbauteil gebildet ist.

5. Vorbaustruktur nach Anspruch 3 oder 4, **dadurch gekennzeichnet, dass** an der Trägerstruktur (18) eine das Fahrerhaus (17) in Längsrichtung und/oder Querrichtung führende Schwinge (22) angelenkt ist.

6. Vorbaustruktur nach einem oder mehreren der vorhergehenden Ansprüche, **dadurch gekennzeichnet, dass** an dem Querträger (11) vertikal nach oben in Fahrzeughochachsenrichtung verlaufende, seitliche Stützen (20) befestigt sind, die das Fahrerhaus (17) im vorderen Bereich über dazwischen geschaltete Federelemente (21) abstützen.

7. Vorbaustruktur nach Anspruch 6, **dadurch gekennzeichnet, dass** die mit dem Querträger (11) verbundenen Stützen (20) über an den seitlichen Randbereichen des Kühlers (15) vorgesehene Halterungen (23) den Kühler (15) tragen.

8. Vorbaustruktur nach einem oder mehreren der vorhergehenden Ansprüche, **dadurch gekennzeichnet, dass** der Querträger (11) über beidseitig angeordnete Konsolen (16) zumindest jeweils eine Trittstufe (16a) für den Einstieg in das Fahrerhaus (17) trägt.

9. Vorbaustruktur nach einem der Ansprüche 6 bis 8, **dadurch gekennzeichnet, dass** die vertikal angeordneten Stützen (20) eine, bezogen auf die Fahrzeuglängsachse, vor dem Kühler (15) angeordnete Bugschürze (19) und einen Stoßfänger tragen.

10. Vorbaustruktur nach einem oder mehreren der vorhergehenden Ansprüche, **dadurch gekennzeichnet, dass** die nach unten abragenden Verlängerungsabschnitte (6, 7) mittels Verbindungselementen (6a, 7a) fest mit den Längsträgern (2, 3) verbunden sind, wobei bevorzugt vorgesehen ist, dass die Verbindungselemente (6a, 7a) aus Blech, insbesondere aus Stahlblech oder als Guss- oder Schmiedebauteil aus Stahl, Eisen oder Leichtmetall hergestellt ist.

11. Vorbaustruktur nach einem oder mehreren der vorhergehenden Ansprüche, **dadurch gekennzeichnet, dass** die nach unten abragenden Verlängerungsabschnitte (6, 7) der Längsträger (2, 3) durch Blechteile oder durch Gussbauteile oder Schmiedebauteile aus Eisen oder Stahl oder Leichtmetall gebildet sind und/oder dass der Querträger (11) als Guss- oder Schmiedebauteil aus Stahl oder Eisen oder Leichtmetall hergestellt ist und/oder dass die, bezogen auf die Fahrzeuglängsachse sowie Fahrzeughochachse, schräg nach vorne und oben abragende Trägerstruktur (18) als Guss- oder Schmiedebauteil aus Stahl, Eisen oder Leichtmetall hergestellt ist.

12. Vorbaustruktur nach einem oder mehreren der vorhergehenden Ansprüche, **dadurch gekennzeichnet, dass** die, bezogen auf die Fahrzeuglängsachse sowie Fahrzeughochachse, schräg nach vorne und oben abragende Trägerstruktur (18) rohrförmig als Hohlprofil ausgeführt ist.

13. Vorbaustruktur nach einem oder mehreren der vorhergehenden Ansprüche, **dadurch gekennzeichnet, dass** an den nach unten abragenden Verlängerungsabschnitten (6, 7) der Längsträger (2, 3) Radführungselemente (8) der Vorderräder (4) des Nutzfahrzeuges angelenkt sind.

14. Vorbaustruktur nach einem oder mehreren der vorhergehenden Ansprüche, **dadurch gekennzeichnet, dass** eine Abschleppkupplung (12) im angebauten Zustand in den Böschungswinkel ragt und/oder abnehmbar ausgeführt ist.

## Claims

1. A front structure for a commercial vehicle, with a frame sub-structure having two longitudinal members (2, 3) running in the longitudinal direction of the vehicle, an elastically mounted driver's cab (17) above the longitudinal members (2, 3), a drive unit (14) which is arranged on the front side and is mounted between the longitudinal members (2, 3) and a radiator (15) which is positioned in front of the drive unit, as seen in the longitudinal direction of the vehicle, and with a crossmember (11) connecting the longitudinal members (2, 3), wherein the longitudinal members (2, 3) are designed, as seen in the longitudinal direction of the vehicle, so as to bend obliquely downwards from the vertical wheel centre plane of the front wheels (4) and forwards with respect to the longitudinal direction of the vehicle and the direction of the vertical axis of the vehicle, wherein the crossmember (11) is connected to said extension sections (6, 7), and in that the radiator (15) is positioned above the crossmember (11), as seen in the direction of the vertical axis of the vehicle, **characterized in that** the crossmember (11) runs in the direction of the vertical axis of the vehicle below and/or in the longitudinal direction of the vehicle behind the lower edge region of the radiator (15) and bears at least one tow-bar coupling (12).

2. The front structure according to Claim 1, **characterized in that** the tow-bar coupling (12) is accessible at the front and/or below and/or to the side of the radiator (15) with respect to the longitudinal direction of the vehicle and the direction of the vertical axis of the vehicle and the transverse direction of the vehicle.

3. The front structure according to Claim 1 or 2, **characterized in that** a support structure (18) which protrudes obliquely forwards and upwards with respect to the longitudinal direction of the vehicle and the direction of the vertical axis of the vehicle and connects the two longitudinal members (2, 3) is provided at the bending point of the longitudinal members (2, 3), said support structure (18) ending on the upper edge region of the radiator (15), with respect to the vertical axis of the vehicle, and behind said edge region, with respect to the longitudinal axis of the vehicle, and at least partially supporting the driver's cab (17).

4. The front structure according to Claim 3, **characterized in that** the support structure (18) is formed by an integral, arcuate profile component.

5. The front structure according to Claim 3 or 4, **characterized in that** a rocker (22) guiding the driver's cab (17) in the longitudinal direction and/or transverse direction is coupled to the support structure (18).

6. The front structure according to one or more of the preceding claims, **characterized in that** lateral supports (20) running vertically upwards in the direction of the vertical axis of the vehicle are fastened to the crossmember (11), said supports (20) supporting the driver's cab (17) in the front region via spring elements (21) connected therebetween.

7. The front structure according to Claim 6, **characterized in that** the supports (20) connected to the crossmember (11) support the radiator (15) via holders (23) provided on the lateral edge regions of the radiator (15).

8. The front structure according to one or more of the preceding claims, **characterized in that** the crossmember (11) via brackets (16) arranged on both sides bears at least one step (16a) in each case for the entry into the driver's cab (17).

9. The front structure according to one of Claims 6 to 8, **characterized in that** the vertically arranged supports (20) support a front skirt (19) which is arranged in front of the radiator (15) with respect to the longitudinal axis of the vehicle, and a bumper.

10. The front structure according to one or more of the preceding claims, **characterized in that** the downwardly protruding extension sections (6, 7) are fixedly connected to the longitudinal members (2, 3) by means of connecting elements (6a, 7a), wherein it is preferably provided that the connecting elements (6a, 7a) are produced from sheet metal, in particular from sheet steel, or in the form of a cast or forged component made of steel, iron or light metal.

11. The front structure according to one or more of the preceding claims, **characterized in that** the downwardly protruding extension sections (6, 7) of the longitudinal members (2, 3) are formed by sheet-metal parts or by cast components or forged components made of iron or steel or light metal, and/or **in that** the crossmember (11) is produced in the form of a cast or forged component made of steel or iron or light metal, and/or **in that** the support structure (18) protruding obliquely forwards and upwards with respect to the longitudinal axis of the vehicle and the vertical axis of the vehicle is produced in the form of a cast or forged component made of steel, iron or light metal.

12. The front structure according to one or more of the preceding claims, **characterized in that** the support structure (18) protruding obliquely forwards and upwards with respect to the longitudinal axis of the vehicle and vertical axis of the vehicle is of tubular design in the form of a hollow profile.

13. The front structure according to one or more of the preceding claims, **characterized in that** wheel-guiding elements (8) of the front wheels (4) of the commercial vehicle are coupled to the downwardly protruding extension sections (6, 7) of the longitudinal members (2, 3).

14. The front structure according to one or more of the preceding claims, **characterized in that** a tow-bar coupling (12) when mounted projects into the angle of slope and/or is designed to be removable.

## Revendications

1. Structure avant pour un véhicule utilitaire, comprenant une sous-structure de châssis dotée de deux longerons (2, 3) s'étendant dans la direction longitudinale du véhicule, une cabine du conducteur (17) montée élastiquement au-dessus des longerons (2, 3), un groupe motopropulseur (14) disposé du côté avant et monté entre les longerons (2, 3) et un radiateur (15) disposé avant celui-ci, vu dans la direction longitudinale du véhicule, et comprenant une traverse (11) reliant les longerons (2, 3), les longerons (2, 3) étant, vus dans la direction longitudinale du véhicule, réalisés de manière coudée de façon inclinée vers l'avant et vers le bas, par rapport à la direction longitudinale du véhicule et à la direction de l'axe vertical du véhicule, avant le plan médian de roue vertical des roues avant (4), la traverse (11) étant attachée à ces portions de prolongement (6, 7), et le radiateur (15) étant positionné au-dessus de la traverse (11), vu dans la direction de l'axe vertical du véhicule, **caractérisée en ce que** la traverse (11) s'étend en dessous de la région de bord inférieure du radiateur (15) dans la direction de l'axe vertical du véhicule et/ou s'étend derrière cette région de bord inférieure dans la direction longitudinale du véhicule et porte au moins un accouplement de remorquage (12).

2. Structure avant selon la revendication 1, **caractérisée en ce que** l'accouplement de remorquage (12) est accessible depuis l'avant du radiateur (15) et/ou depuis le dessous du radiateur et/ou latéralement par rapport au radiateur, par rapport à la direction longitudinale du véhicule et à la direction de l'axe vertical du véhicule ainsi qu'à la direction transversale du véhicule.

3. Structure avant selon la revendication 1 ou 2, **caractérisée en ce qu'**au point de courbure des longerons (2, 3) est prévue une structure de support (18) faisant saillie de manière inclinée vers l'avant et vers le haut par rapport à la direction longitudinale du véhicule et à la direction de l'axe vertical du véhicule et reliant les deux longerons (2, 3), laquelle structure de support se termine au niveau de la région de bord supérieure, par rapport à l'axe vertical du véhicule, du radiateur (15) et derrière celle-ci, par rapport à l'axe longitudinal du véhicule, et supporte au moins partiellement la cabine du conducteur (17).

4. Structure avant selon la revendication 3, **caractérisée en ce que** la structure de support (18) est formée par un composant profilé arqué d'une seule pièce.

5. Structure avant selon la revendication 3 ou 4, **caractérisée en ce qu'**un bras oscillant (22) guidant la cabine du conducteur (17) dans la direction longitudinale et/ou dans la direction transversale est articulé sur la structure de support (18).

6. Structure avant selon l'une quelconque ou plusieurs des revendications précédentes, **caractérisée en ce que** des supports latéraux (20) s'étendant verticalement vers le haut dans la direction de l'axe vertical du véhicule sont fixés à la traverse (11), lesquels supports supportent la cabine du conducteur (17) dans la région avant par le biais d'éléments de ressort (21) connectés entre ceux-ci.

7. Structure avant selon la revendication 6, **caractérisée en ce que** les supports (20) reliés à la traverse (11) portent le radiateur (15) par le biais d'éléments de retenue (23) prévus sur les régions de bord latérales du radiateur (15).

8. Structure avant selon l'une quelconque ou plusieurs des revendications précédentes, **caractérisée en ce que** la traverse (11) porte, par le biais de consoles (16) disposées des deux côtés, au moins à chaque fois un marchepied (16a) pour l'entrée dans la cabine du conducteur (17).

9. Structure avant selon l'une quelconque des revendications 6 à 8, **caractérisée en ce que** les supports (20) disposés verticalement portent une jupe avant (19) disposée avant le radiateur (15), par rapport à l'axe longitudinal du véhicule, et un pare-chocs.

10. Structure avant selon l'une quelconque ou plusieurs des revendications précédentes, **caractérisée en ce que** les portions de prolongement (6, 7) faisant saillie vers le bas sont reliées fixement aux longerons (2, 3) au moyen d'éléments de liaison (6a, 7a), dans laquelle il est de préférence prévu que les éléments de liaison (6a, 7a) soient fabriqués en tôle, en particulier en tôle d'acier ou sous forme de composant coulé ou forgé en acier, en fer ou en métal léger.

11. Structure avant selon l'une quelconque ou plusieurs des revendications précédentes, **caractérisée en ce que** les portions de prolongement (6, 7), faisant saillie vers le bas, des longerons (2, 3) sont formées par des pièces en tôle ou par des composants coulés ou des composants forgés en fer ou en acier ou en métal léger et/ou **en ce que** la traverse (11) est fabriquée sous forme de composant coulé ou forgé en acier ou en fer ou en métal léger et/ou **en ce que** la structure de support (18) faisant saillie de manière inclinée vers l'avant et vers le haut, par rapport à l'axe longitudinal du véhicule ainsi qu'à l'axe vertical du véhicule, est fabriquée sous forme de composant coulé ou forgé en acier, en fer ou en métal léger.

12. Structure avant selon l'une quelconque ou plusieurs des revendications précédentes, **caractérisée en ce que** la structure de support (18) faisant saillie de manière inclinée vers l'avant et vers le haut, par rapport à l'axe longitudinal du véhicule ainsi qu'à l'axe vertical du véhicule, est réalisée de manière tubulaire sous forme de profilé creux.

13. Structure avant selon l'une quelconque ou plusieurs des revendications précédentes, **caractérisée en ce que** des éléments de guidage de roue (8) des roues avant (4) du véhicule utilitaire sont articulés sur les portions de prolongement (6, 7), faisant saillie vers le bas, des longerons (2, 3).

14. Structure avant selon l'une quelconque ou plusieurs des revendications précédentes, **caractérisée en ce qu'**un accouplement de remorquage (12) fait saillie dans l'angle de pente à l'état monté et/ou est réalisé de manière amovible.
